# EUROPEAN PATENT SPECIFICATION

(11) **EP 2 822 306 B1**
(45) Date of publication and mention of the grant of the patent: **25.09.2019**
(21) Application number: 13760313.0
(22) Date of filing: 04.02.2013
(51) Int. Cl.: H04W 36/00, H04W 4/90, H04W 8/18, H04W 36/04, H04W 76/50, H04W 84/04

(54) **HANDOVER METHOD AND APPARATUS**
WEITERLEITUNGSVERFAHREN UND -VORRICHTUNG
PROCÉDÉ ET DISPOSITIF POUR UN TRANSFERT INTERCELLULAIRE

(30) Priority: 15.03.2012 CN 201210068940
(43) Date of publication of application: 07.01.2015
(73) Proprietor: Huawei Technologies Co., Ltd., Longgang District Shenzhen, Guangdong 518129 (CN)
(72) Inventor: XU, Min, Shenzhen Guangdong 518129 (CN)
(74) Representative: Pfenning, Meinig & Partner mbB
(86) International application number: PCT/CN2013/071313
(87) International publication number: WO 2013/135123

(56) References cited:
- WO-A1-2011/088067
- CN-A- 101 883 347
- CN-A- 102 045 676
- ALCATEL-LUCENT: "Handover to CSG cell with emergency bearer", 3GPP DRAFT; S2-115410 WAS5341 WAS5229_23401R10_EMERGENCY HANDOVERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, 19 November 2011 (2011-11-19) , XP050575807,
- Gavin Horn: "3GPP Femtocells: Architecture and Protocols", , 1 September 2010 (2010-09-01), pages 1-63, XP055042410, Retrieved from the Internet: URL:http://www.qualcomm.com/media/document s/files/3gpp-femtocells-architecture-and-p rotocols.pdf [retrieved on 2012-10-26]
- HUAWEI: "Discussion on handover to a CSG cell with emergency call", 3GPP DRAFT; R3-120997_DISC_CSG_EMC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech; 20120521 - 20120525, 11 May 2012 (2012-05-11), XP050611062, [retrieved on 2012-05-11]
- HUAWEI ET AL: "Correction on handover to a CSG cell with an emergency call", 3GPP DRAFT; R3-121949_EMC_25413R11CR1177R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao, China; 20120813 - 20120817 17 August 2012 (2012-08-17), XP050669733, Retrieved from the Internet: URL:http://www.3gpp.org/ftp/tsg_ran/WG3_Iu /TSGR3_77/Docs/ [retrieved on 2012-08-17]

## Description

### TECHNICAL FIELD

The present invention relates to the field of radio communications technologies, and in particular, to a method and an apparatus for handing over a UE (User Equipment, user equipment) having an emergency service to a micro cell base station.

### BACKGROUND

With the development of mobile communications technologies, user requirements become more diversified. In order to satisfy the diversified requirements of users, a base station for indoor coverage of a home, a base station for internal coverage of an enterprise, and some other private networks come out. Meanwhile, a micro cell base station becomes a most promising low-cost access technology, where the micro cell base station includes an HNB (Home NodeB, home base station), which may also be referred to as a femtocell base station, a femto (home base station), an AP (Access point, access point), and the like.

An HNB has three different access modes: a closed mode, a mixed mode, and an open mode. The closed mode allows only a subscriber to access a cell. The mixed mode allows all users to access a cell, but subscribers and non-subscribers are differentiated and are provided separately with different access levels and classes of services. The open mode, which is similar to a macro network cell, allows access of all users. Before a UE accesses an HNB, the HNB needs to perform access control on the UE to determine whether the UE has permission for accessing, or whether the user performs access as a member user or a non-member user. Compared with a conventional macro base station, an HNB, as a femtocell base station, has the following characteristics: A coverage range is small; the number of carried users is limited; a quantity is large; deployment is dense; overlapping coverage of multiple layers is implemented; devices are managed by a user, not controlled by an operator; an HNB frequency band may be deployed with a macro network in an inter-frequency manner or deployed in an intra-frequency manner; transmit power is low; and an HNB neighboring cell list is difficult to configure, and the HNB can, by using uplink detection, automatically configure neighboring cells and complete frequency and scrambling code selection upon startup. The HNB is applicable to a very wide range of scenarios such as home, enterprises, and public areas. In scenarios of an enterprise and a public area where multiple HNBs are required to perform contiguous network deployment, the HNB may be introduced to enhance indoor coverage in these scenarios, and may also help a macro cell to offload services.

A UE has a service in both a CS (Circuit Switched, circuit switched) and a PS (Packet Switched, packet switched), and has an emergency service in the CS domain. In the prior art, a handling procedure for a UE to be handed over from a WCDMA (Wideband Code Division Multiple Access, wideband code division multiple access) system to an HNB system includes the following handling process:
A UE obtains a CSG ID (Closed Subscriber Group Identity, closed subscriber group identity) of a target HNB cell by receiving a system message broadcasted by the target HNB; the UE performs initial access checking to determine whether the CSG ID of the target HNB cell is included in a white list of the UE; and the UE sends a measurement control message to a source RNC (Radio Network Controller, radio network controller), where the measurement control message carries the CSG ID of the target HNB cell and a member state indication (member or non-member).

The source RNC triggers a handover procedure after receiving the measurement control message, so as to send a Handover Required (Relocation Required) message separately to a CS core network node MSC (Mobile Switching Center, mobile switching center) and a PS core network node SGSN (Serving GPRS Support Node, serving GPRS support node), where the message includes information such as the CSG ID of the target HNB cell and an access mode of the target HNB cell (if no cell access mode is carried, it indicates that the target cell has a closed mode).

After receiving the Handover Required message sent by the source RNC, the SGSN of the PS domain performs access control on the UE and finds that subscription information of the UE does not include the CSG ID of the target HNB cell. The access control fails, and a Handover Preparation Failure message is sent to the RNC. After receiving the Handover Required message sent by the source RNC, the MSC of the CS finds that the UE has an emergency call service and the UE has no permission to access the target HNB cell, sends a Handover Request (Relocation Request) message to the HNB, and carries, in the Handover Request message, the CSG ID of the target HNB cell and member state information indicating that the UE is a non-member.

The target HNB receives information, which indicates that handover involves two domains, in a transparent container in the Handover Request message of the CS domain, and waits for a Handover Request message of the PS domain. After waiting for a period of time without receiving a Handover Request Response message of the HNB, the MSC of the CS domain sends a Handover Preparation Failure message to the source RNC. Then, the entire handover procedure fails.

Or, the source RNC sends a Handover Cancel message to the MSC of the CS domain after receiving the Handover Preparation Failure message sent by the SGSN of the PS domain, which also causes the entire handover procedure to fail.

A shortcoming of the handover procedure in the prior art is that a UE having an emergency service cannot be handed over to the target HNB.

3GPP draft document S2-115410 "Handover to CSG cell with emergency bearer" provides a change request to 3GPP technical specification TS 23.401 for support of handover with emergency bearer to a CSG cell.

The internet publication "3GPP Femtocell: Architecture and Protocols" by Gavin Horn provides an overview of the status and standards of Home NodeBs.

### SUMMARY

The invention is defined in the appended set of claims.

Embodiments of the present invention provide a handover method and system, thereby implementing handing over an emergency service of a UE to a micro cell to which the UE has no permission for accessing.

In one aspect of the present invention, a handover method is provided, including: when an access mode of a micro cell base station is a closed mode, where access is permitted only to user equipment that is member of an associated closed subscriber group (CSG), receiving, by the micro cell base station, a Handover Request message sent by a core network node of a first domain of either a packet switched (PS) domain or a circuit switched (CS) domain, where the Handover Request message carries a member state indication of the user equipment indicating a non-member of the CSG and indicates the user equipment has service in multiple domains and an emergency service in the first domain; and rejecting, by the micro cell base station, a bearer of a non-emergency service of the user equipment in the first domain, and handing over, by the micro cell base station, the emergency service of the user equipment in the first domain to a cell in which the micro cell base station is located, wherein the core network node of the first domain sends the handover request message without performing access control on the user equipment or after access control on the user equipment fails.

In another aspect, a handover method is provided, including: receiving, by a radio network controller, a measurement report message sent by a user equipment; and when the user equipment has an emergency service in a first domain, sending, by the radio network controller, a Handover Required message to a core network node of the first domain, so that the core network node of the first domain sends a Handover Request message to a micro cell base station according to a fact that the user equipment has the emergency service in the first domain, and the micro cell base station rejects a bearer of a non-emergency service of the user equipment in the first domain, and hands over the emergency service of the user equipment in the first domain to a cell in which the micro cell base station is located.

In another aspect, a handover method is provided, including: receiving, by a radio network controller, a measurement report message sent by a user equipment; and when the user equipment has an emergency service in a first domain, sending, by the radio network controller, a Handover Required message separately to core network nodes of the first domain and another domain except the first domain, where the Handover Required message sent to the core network node of the another domain carries an indication which indicates that the user equipment has the emergency service in the first domain or does not carry a closed subscriber group identity of a micro cell base station, so that the core network node of the another domain sends a Handover Request message to the core network node, and the micro cell base station rejects a bearer of a non-emergency service of the user equipment and hands over the emergency service of the user equipment in the first domain to a cell in which the micro cell base station is located; or when the user equipment has an emergency service in the first domain, sending, by the radio network controller, a Handover Required message separately to core network nodes of the first domain and another domain except the first domain, and after receiving a Handover Preparation Failure message sent by the core network node of the another domain, sending no Handover Cancel message to the core network node of the first domain, so that the core network node of the first domain sends a Handover Request message to the micro cell base station, and the micro cell base station rejects a bearer of a non-emergency service of the user equipment and hands over the emergency service of the user equipment in the first domain to a cell in which the micro cell base station is located. In another aspect, a handover method is provided, including: receiving, by a core network node of a first domain, a Handover Required message which is sent by a radio network controller and indicates that a user equipment has an emergency service in another domain; and sending, by the core network node of the first domain, a Handover Request message to a micro cell base station without performing access control on the user equipment; or sending a Handover Request message to a micro cell base station after access control on the user equipment fails.

In another aspect of the present invention a system comprising a core network node and a microcell base station is provided, wherein the micro cell base station includes:
a handover request receiving module, configured to: when an access mode of the micro cell base station is a closed mode, where access is permitted only to user equipment that is member of an associated closed subscriber group (CSG), receive a Handover Request message sent by the core network node of a first domain of either a packet switched (PS) domain or a circuit switched (CS) domain, where the Handover Request message carries indication information indicating that a member state indication of the user equipment is a non-member of the CSG and indicates the user equipment has service in muliple domains and an emergency service in the first domain; and
a handover processing module, configured to reject a bearer of a non-emergency service of the user equipment in the first domain, and hand over the emergency service of the user equipment in the first domain to a cell in which the micro cell base station is located, wherein the core network node of the first domain sends the handover request message without performing access control on the user equipment or after access control on the user equipment fails.

In another aspect, a radio network controller is provided, including: a measurement report message receiving module, configured to receive a measurement report message sent by a user equipment; and a handover processing module, configured to send a Handover Required message to a core network node of the first domain, so that the core network node of the first domain sends a Handover Request message to a micro cell base station according to a fact that the user equipment has an emergency service in the first domain, and the micro cell base station rejects a bearer of a non-emergency service of the user equipment in the first domain, and hands over the emergency service of the user equipment in the first domain to a cell in which the micro cell base station is located.

In another aspect, a radio network controller is provided, including: a measurement report message receiving module, configured to receive a measurement report message sent by a user equipment; and a handover processing module, configured to: when the user equipment has an emergency service in a first domain, send a Handover Required message separately to core network nodes of the first domain and another domain except the first domain, where the Handover Required message sent to the core network node of the another domain carries an indication which indicates that the user equipment has the emergency service in the first domain or does not carry a closed subscriber group identity of a micro cell base station, so that the core network node of the another domain sends a Handover Request message to the core network node, and the micro cell base station rejects a bearer of a non-emergency service of the user equipment and hands over the emergency service of the user equipment in the first domain to a cell in which the micro cell base station is located; or when the user equipment has an emergency service in the first domain, send a Handover Required message separately to core network nodes of the first domain and another domain except the first domain, and after receiving a Handover Preparation Failure message sent by the core network node of the another domain, send no Handover Cancel message to the core network node of the first domain, so that the core network node of the first domain sends a Handover Request message to the micro cell base station, and the micro cell base
station rejects a bearer of a non-emergency service of the user equipment and hands over the emergency service of the user equipment in the first domain to a cell in which the micro cell base station is located.

In another aspect, a core network node is provided, including: a Handover Required message receiving module, configured to receive a Handover Required message which is sent by a radio network controller and indicates that a user equipment has an emergency service in another domain; and
a handover processing module, configured to send a Handover Request message to a micro cell base station without performing access control on the user equipment; or send a Handover Request message to a micro cell base station after access control on the user equipment fails.

According to the technical solutions provided in the embodiments of the present invention, it can be ensured that an emergency service of a UE can be handed over to a cell of a micro cell base station to which the UE has no permission for accessing.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a specific processing flowchart of a method for handing over a UE having an emergency service to a micro cell base station according to an embodiment of the present invention;
FIG. 2 is a specific processing flowchart of a method for handing over a UE to a target HNB according to another embodiment of the present invention;
FIG. 3 is a specific processing flowchart of a method for handing over a UE to a target HNB according to another embodiment of the present invention;
FIG. 4 is a specific processing flowchart of a method for handing over a UE to a target HNB according to another embodiment of the present invention;
FIG. 5 is a specific structural diagram of a micro cell base station according to another embodiment of the present invention;
FIG. 6 is a specific structural diagram of a radio network controller according to another embodiment of the present invention;
FIG. 7 is a specific structural diagram of a radio network controller according to another embodiment of the present invention; and
FIG. 8 is a specific structural diagram of a core network node according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

For ease of understanding of the embodiments of the present invention, the following provides further explanation and description with reference to accompanying drawings and by using several specific embodiments as an example, where each of the embodiments do not constitute a limit on the embodiments of the present invention.

The technologies described herein may be applied to a variety of communications systems, such as an existing 2G or 3G communications system and a next generation communications system, for example, a global system for mobile communications (GSM, Global System for Mobile communications), a code division multiple access (CDMA, Code Division Multiple Access) system, a time division multiple access (TDMA, Time Division Multiple Access) system, a wideband code division multiple access (WCDMA, Wideband Code Division Multiple Access Wireless) system, a frequency division multiple access (FDMA, Frequency Division Multiple Addressing) system, an orthogonal frequency-division multiple access (OFDMA, Orthogonal Frequency-Division Multiple Access) system, a single-carrier FDMA (SC-FDMA) system, a general packet radio service (GPRS, General Packet Radio Service) system, a long term evolution (LTE, Long Term Evolution) system, and other communications systems of the like.

The aspects in this document are described with reference to a user equipment and/or a base station and/or a base station controller.

The user equipment may be a wireless terminal or a wired terminal, where the wireless terminal may refer to a device providing voice and/or data connectivity for a user, a hand-held device having a wireless connection function, or another processing device connected to a wireless modem. A wireless terminal may communicate with one or more core networks through a radio access network (for example, RAN, Radio Access Network). The wireless terminal may be a mobile terminal, such as a mobile phone (which may also be referred to as a "cellular" phone), and a computer having a mobile terminal, for example, a portable, pocket-sized, handheld, computer built-in, or vehicle-mounted mobile apparatus, which exchange voice and/or data with a radio access network. For example, the wireless terminal may be a device such as a personal communication service (PCS, Personal Communication Service) telephone, a cordless telephone, a Session Initiation Protocol (SIP) telephone, a wireless local loop (WLL, Wireless Local Loop) station, and a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

A base station (for example, an access point) may refer to a device that communicates with a wireless terminal through one or more sectors on an air interface in an access network. The base station may be used to perform mutual conversion between a received air frame and an IP packet, and functions as a router between a wireless terminal and other parts of the access network, where the other parts of the access network may include an Internet Protocol (IP) network. The base station may also coordinate attribute management over the air interface. For example, the base station may be a base transceiver station (BTS, Base Transceiver Station) in GSM or CDMA, a NodeB (NodeB) in WCDMA, or an evolved NodeB (NodeB or eNB or e-NodeB, or evolutional NodeB) in LTE, which is not limited in the present invention.

A base station controller may be a base station controller (BSC, base station controller) in the GSM or the CDMA or be a radio network controller (RNC, Radio Network Controller) in the WCDMA, which is not limited in the present invention.

In addition, terms "system" and "network" may be used interchangeably in this document. A term "and/or" in this document merely describes an association relationship between associated objects, indicating three types of relationships may exist, for example, A and/or B may represent three cases where only A exists, A and B exist at the same time, and only B exists. In addition, a symbol "/" in this document generally represents an "or" relationship between associated objects.

### Embodiment

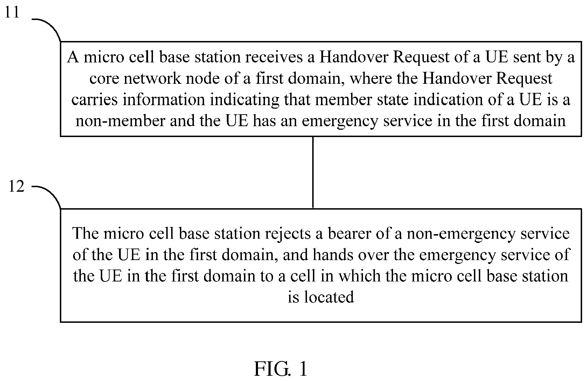

This embodiment provides a method for handing over a UE having an emergency service to a micro cell base station. A specific handling procedure of the method is shown in FIG. 1, which includes the following handling procedure.
11. A micro cell base station receives a Handover Request sent by a core network node of a first domain, where the Handover Request carries information indicating that a member state indication of a UE is a non-member and the UE has an emergency service in the first domain. An application scenario of this embodiment is as follows: an access mode of the micro cell base station is a closed mode, the UE has no permission to access a target micro cell, and the micro cell base station may be an HNB, which may also be referred to as a femtocell base station, a femto, or an AP. When the UE has a service in multiple domains and has an emergency service in the first domain, the first domain of the UE may be a PS domain or a CS domain, and the UE is to be handed over from a radio communication system such as a GSM, GPRS, CDMA2000, TD-SCDMA, LTE, WLAN/WiFi (Wireless Fidelity, wireless fidelity), or WiMAX (Worldwide Interoperability for Microwave Access, worldwide interoperability for microwave access) to a system of the micro cell base station.

The micro cell base station receives a Handover Request message sent by the core network node of the first domain, where the Handover Request message carries information indicating that a member state indication of a UE is a non-member and the UE has an emergency service in the first domain.
12. The micro cell base station rejects a bearer of a non-emergency service of the UE in the first domain, and hands over the emergency service of the UE in the first domain to a cell in which the micro cell base station is located.

Specifically, when the Handover Request sent by the core network node of the first domain further indicates that the UE handover involves multiple domains, the micro cell base station may perform the following first handling process or second handling process.

First handling process: The micro cell base station waits to receive a Handover Request message sent by a core network node of another domain except the first domain in the multiple domains, and then rejects a service of the UE in the another domain, rejects a bearer of the non-emergency service of the UE in the first domain, and hands over the emergency service of the UE in the first domain to the cell in which the micro cell base station is located, where:
the Handover Request message sent by the core network node of the another domain is sent by the core network node of the another domain after receiving Handover Required information which is sent by the radio network controller and includes an indication which indicates that the UE has the emergency service in the first domain, where the core network node of the another domain, after receiving the Handover Required message that includes the indication which indicates that the UE has the emergency service in the first domain, sends the Handover Request message to the micro cell base station regardless of whether access control fails, access control cannot be performed, or access control is not performed, and further the Handover Request message includes an indication which indicates that the UE is a non-member; or is sent by the core network node of the another domain after receiving a Handover Required message which is sent by the radio network controller and includes no closed subscriber user group identity of the micro cell base station.

Second handling process: The micro cell base station directly rejects a bearer of the non-emergency service of the UE in the first domain without waiting for a Handover Request message sent by the core network node of the another domain, and hands over the emergency service of the UE in the first domain to the cell in which the micro cell base station is located. Specifically, when a first Handover Request of the UE which is sent by the core network node of the first domain and received by the micro cell base station further carries information indicating that the handover involves two domains and that a member state of the UE is a non-member, the micro cell base station immediately rejects a bearer of the non-emergency service of the UE in the first domain, and hands over the emergency service of the UE in the first domain to the cell in which the micro cell base station is located.

This embodiment provides another method for handing over a UE having an emergency service to a micro cell base station, where a specific handling process includes:
receiving, by a radio network controller, a measurement report message sent by a UE; and
when the UE has an emergency service in a first domain, sending, by the radio network controller, a Handover Required message only to a core network node of the first domain, so that the core network node of the first domain sends a Handover Request message to a micro cell base station according to a fact that the UE has the emergency service in the first domain, and the micro cell base station rejects a bearer of a non-emergency service of the UE in the first domain, and hands over the emergency service of the UE in the first domain to a cell in which the micro cell base station is located.

Further, the method further includes:
releasing, by the radio network controller, all services of the UE in another domain except the first domain first, and then sending the Handover Required message only to the core network node of the first domain.

Further, the method further includes:
when the user equipment has a service in multiple domains, sending, by the radio network controller, the Handover Required message only to the core network node of the first domain.

Further, the method further includes:
sending, by the radio network controller according to information which is further carried in the measurement report message and indicates that the UE is not a member of a cell of a target micro cell base station, the Handover Required message only to the core network node of the first domain;
   or
releasing, by the radio network controller according to information which is further carried in the measurement report message and indicates that the UE is not a member of a cell of a target micro cell base station, all the services of the UE in the another domain except the first domain first, and then sending the Handover Required message only to the core network node of the first domain.

A specific handling process of another method for handing over a UE having an emergency service to a micro cell base station provided in this embodiment includes:
receiving, by a radio network controller, a measurement report message sent by a UE; and
sending, by the radio network controller, a Handover Required message separately to core network nodes of a first domain and another domain except the first domain, where the Handover Required message sent to the core network node of the another domain carries an indication which indicates that the UE has an emergency service in the first domain, or does not carry a closed subscriber group identity of the micro cell base station, so that the core network node of the another domain sends a Handover Request message to the micro cell base station;
or sending, by the radio network controller, a Handover Required message separately to the core network nodes of the first domain and the another domain except the first domain, and after receiving a Handover Preparation Failure message sent by the another domain, sending, by the radio network controller, no Handover Cancel message to the first domain, and
rejecting, by the micro cell base station, a bearer of a non-emergency service of the UE, and hands over the emergency service of the UE in the first domain to a cell in which the micro cell base station is located.

A specific handling process of another method for handing over a UE having an emergency service to a micro cell base station provided in this embodiment includes:
receiving, by a core network node of a first domain, a Handover Required message which is sent by a radio network controller and indicates that a user equipment has an emergency service in another domain; and
sending, by the core network node of the first domain, a Handover Request message to a micro cell base station without performing access control on the user equipment; or sending a Handover Request message to a micro cell base station after access control on the user equipment fails.

The following embodiment is described as follows by using an example that a UE has a service in both a CS domain and a PS domain and has an emergency service only in the CS domain, a micro cell base station is an HNB, and the UE is to be handed over from a macro network of a WCDMA system to an HNB system.

In an actual application, the UE may also have an emergency service only in the PS domain, and the WCDMA system may also be another radio communication system, where these equivalent solutions are technologies commonly known by a person skilled in the art, which is not described in detail herein.

### Embodiment

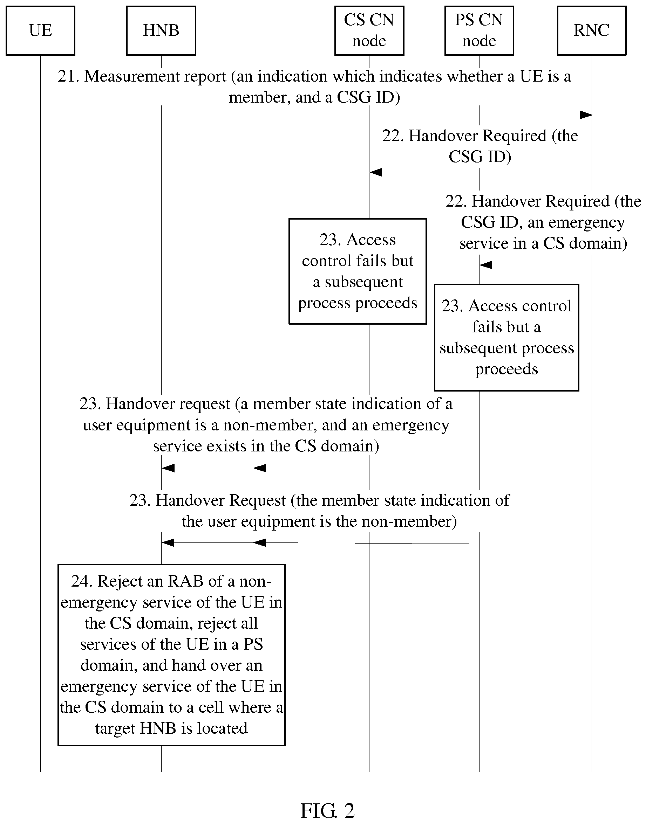

A specific handling procedure of a method for handing over a UE to a target HNB provided in this embodiment is shown in FIG. 2, which includes the following handling procedure.
21. A UE sends a measurement report message to a source RNC, where the measurement report message carries information such as a CSG ID of a target HNB cell and indication information that indicates whether the UE is a member of the target HNB cell.
22. The source RNC triggers a handover procedure after receiving the measurement report message, and sends a Handover Required message separately to a CS CN node (a CS core network node, which may be an MSC) and a PS CN node (a PS core network node, which may be an SGSN), where the Handover Required message carries information such as the CSG ID of the target HNB cell; and includes an emergency service indication in the Handover Required message sent to the PS CN node, so as to notify that the UE has an emergency call service in a CS domain.
23. The PS CN node and the CS CN node perform access control on the UE after receiving the Handover Required message sent by the source RNC, and find that the access control fails according to a fact that the CSG ID of the target HNB cell is not included in subscription information of the UE.

However, the PS CN node (by using the emergency service indication carried in the Handover Required message sent by the source RNC) and the CS CN node both find that the UE has the emergency call service in the CS domain; although the access control fails, the access control cannot be performed, or the access control is not performed, the PS CN node and the CS CN node still send a Handover Request message to the target HNB, where the Handover Request message carries information such as the CSG ID of the target HNB cell and a member state of the UE indicating a non-member. 24. After receiving the Handover Request message sent by the PS CN node and the CS CN node, the target HNB rejects an RAB (Radio Access Bearer, radio access bearer) of a non-emergency service of the UE in the CS domain; rejects all services of the UE in the PS domain; and hands over the emergency service of the UE in the CS domain to a cell in which the target HNB is located.

### Embodiment

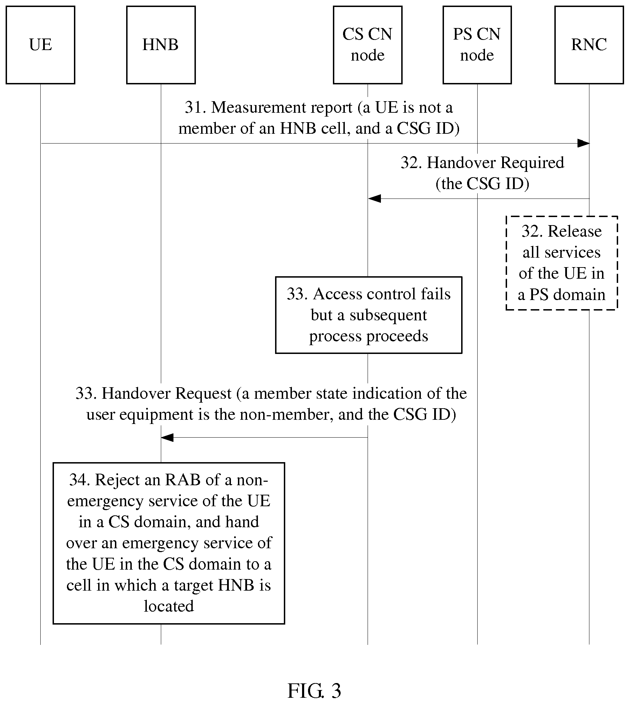

A specific handling procedure of a method for handing over a UE to a target HNB provided in this embodiment is shown in FIG. 3, which includes the following handling procedure.
31. A UE sends a measurement report message to a source RNC, where the measurement report message carries information such as a CSG ID of a target HNB cell and an indication that indicates whether the UE is a member of the target HNB cell.
32. The source RNC triggers a handover procedure after receiving the measurement report message, and finds that the UE has an emergency service only in a CS domain. Therefore, the source RNC sends a Handover Required message only to a CS CN node (a CS core network node), where the Handover Required message carries information such as the CSG ID of the target HNB cell and information that indicates that the UE has a service only in the CS domain. Further, according to member state information carried in the measurement report message of the UE, and if the UE is a non-member, the source RNC sends a Handover Required message only to a CS CN node.

Alternatively, the source RNC receives the measurement report message and finds that the UE has an emergency service only in a CS domain, and the source RNC triggers a handover procedure after releasing all services of the UE in the PS domain. Alternatively, the source RNC receives the measurement report message and releases all non-emergency services of the UE (if the UE has a service in two domains, releases a non-emergency service in the two domains; if the user has only one domain, release a non-emergency service in the domain). Further, according to member state information carried in the measurement report message of the UE, and if the UE is a non-member, the source RNC triggers a handover procedure after releasing all services of the UE in a PS domain or all non-emergency services of the UE. 33. The CS CN node performs access control on the UE after receiving the Handover Required message sent by the source RNC, and finds that the access control fails according to a fact that the CSG ID of the target HNB cell is not included in subscription information of the UE.

However, the CS CN node finds that the UE has an emergency call service in the CS domain, even if the access control fails, the CS CN node still sends a Handover Request message to the target HNB, where the Handover Request message carries information such as the CSG ID of the target HNB cell, a member state of the UE indicating a non-member, and information indicating that the UE has a service only in the CS domain and has an emergency service in the CS domain. 34. After receiving the Handover Request message sent by the CS CN node, the target HNB rejects an RAB of the non-emergency service of the UE in the CS domain, and hands over the emergency service of the UE in the CS domain to a cell in which the target HNB is located.

### Embodiment

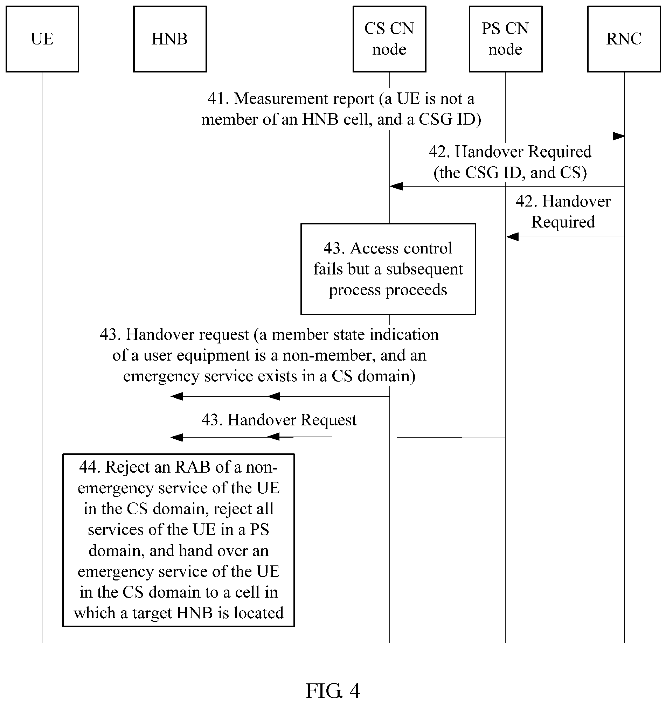

A specific handling procedure of a method for handing over a UE to a target HNB provided in this embodiment is shown in FIG. 4, which includes the following handling procedure.
41. A UE sends a measurement report message to a source RNC, where the measurement report message carries information such as a CSG ID of a target HNB cell and indication information that indicates whether the UE is a member of the target HNB cell.
42. The source RNC triggers a handover procedure after receiving the measurement report message, and sends a Handover Required message to a CS CN node, where the Handover Required message carries information such as the CSG ID of the target HNB cell.
   The source RNC further sends a Handover Required message to a PS CN node, where the Handover Required message does not carry the CSG ID information of the target HNB cell.
43. The CS CN node performs access control on the UE after receiving the Handover Required message sent by the source RNC, and finds that the access control fails according to a fact that the CSG ID of the target HNB cell is not included in subscription information of the UE.

However, the CS CN node finds that the UE has an emergency call service in the CS domain, even if the access control fails, the CS CN node still sends a Handover Request message to the target HNB, where the Handover Request message carries information such as the CSG ID of the target HNB cell and a member state of the UE indicating a non-member.

After receiving the Handover Required message sent by the source RNC, the PS CN node does not perform access control on the UE because the message does not include the CSG ID information of the target HNB cell, and sends a Handover Request message to the target HNB, where the Handover Request message carries information indicating that the UE has a service in both the CS domain and the PS domain. 44. After receiving the Handover Request message sent by the PS CN node and the CS CN node, the target HNB rejects an RAB (Radio Access Bearer, radio access bear) of a non-emergency service of the UE in the CS domain according to an access control result of the CS domain; rejects all services of the UE in the PS domain; and hands over the emergency service of the UE in the CS domain to a cell in which the target HNB is located.

### Embodiment

A specific handling process of a method for handing over a UE to a target HNB provided in this embodiment includes the following content:
A target HNB receives only a Handover Request message sent by a CS CN node, where the Handover Request message carries information such as an indication which indicates that handover involves multiple domains, a CSG ID of a target HNB cell, and a member state of a UE indicating a non-member. The target HNB directly rejects, according to information such as a closed access mode thereof and information indicating that a CS domain includes an emergency bearer, an RAB of a non-emergency service of the UE in the CS domain without waiting for a Handover Request message from a PS domain, accepts an RAB of an emergency bearer, and hands over an emergency service of the UE in the CS domain to a cell in which the target HNB is located. Further, the target HNB starts a timer after receiving only the Handover Request message sent by the CS CN node, where the timer is shorter than a timer TRELOCalloc for initiating a Handover Preparation Failure message; and if the timer expires, processes only a Handover Request of the CS domain.

After failing to perform access control on the UE, a PS CN node sends a Handover Preparation Failure message to a source RNC; after receiving the Handover Preparation Failure message, the source RNC determines that the failure is caused due to no permission to access the target HNB, meanwhile determines that the UE has an emergency service in the CS domain, and does not trigger a handover cancel procedure for the CS domain. Optionally, the source RNC may choose to release all services of the UE in the PS domain.

### Embodiment

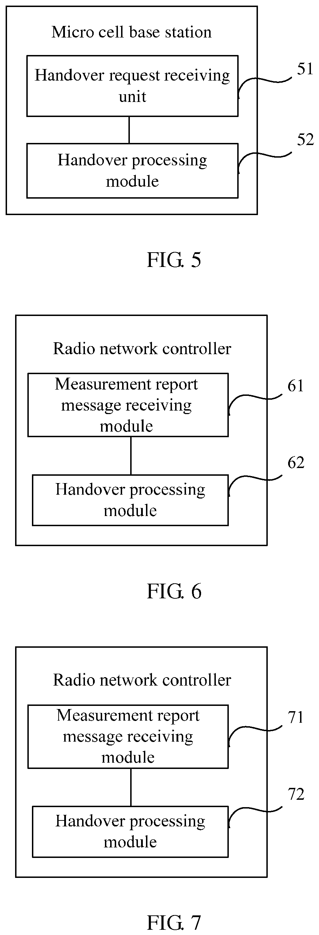

This embodiment provides a micro cell base station, where a specific implementation structure thereof is shown in FIG. 5, which may specifically include: a handover request receiving unit 51 and a handover processing module 52.

The handover request receiving module 51 is configured to: when an access mode of the micro cell base station is a closed mode and a user equipment has a service in multiple domains, receive a Handover Request message of the user equipment sent by a core network node of a first domain, where the Handover Request message carries indication information indicating that a member state indication of the user equipment indicates a non-member and the user equipment has an emergency service in the first domain.

The handover processing module 52 is configured to reject a bearer of a non-emergency service of the user equipment in the first domain, and hand over the emergency service of the user equipment in the first domain to a cell in which the micro cell base station is located. Further, the handover processing module 52 is specifically configured to: when the Handover Request message which is sent by the core network node of the first domain and received by the handover request receiving module 51 indicates that the user equipment has a service in multiple domains, and after receiving a Handover Request message sent by a core network node of another domain except the first domain of the multiple domains, reject a service of the user equipment in the another domain, reject a bearer of a non-emergency service of the user equipment in the first domain, and hand over the emergency service of the user equipment in the first domain to the cell in which the micro cell base station is located.

The Handover Request message sent by the core network node of the another domain is sent by the core network node of the another domain after receiving the Handover Required message which is sent by the radio network controller of the user equipment and includes an indication which indicates that the user equipment has the emergency service; or is sent by the core network node of the another domain after receiving a Handover Required message which is sent by the radio network controller of the user equipment and includes no closed subscriber user group identity of the micro cell base station.

Further, the handover processing module 52 is specifically configured to: when the Handover Request message which is sent by the core network node of the first domain and received by the handover request receiving module 51 indicates that the user equipment has a service in multiple domains, directly reject a bearer of a non-emergency service of the user equipment in the first domain without waiting for a Handover Request of the user equipment sent by a core network node of another domain except the first domain of the multiple domains, and hand over the emergency service of the user equipment in the first domain to the cell in which the micro cell base station is located.

This embodiment further provides a radio network controller, where a specific structure thereof is shown in FIG. 6, which includes the following modules:
a measurement report message receiving module 61, configured to receive a measurement report message sent by a user equipment; and
a handover processing module 62, configured to send a Handover Required message to a core network node of the first domain, so that the core network node of the first domain sends a Handover Request message to a micro cell base station according to a fact that the user equipment has an emergency service in the first domain, and the micro cell base station rejects a bearer of a non-emergency service of the user equipment in the first domain, and hands over the emergency service of the user equipment in the first domain to a cell in which the micro cell base station is located.

Specifically, the handover processing module 62 is further configured to: after releasing all services of the user equipment in another domain except the first domain first, send the Handover Required message only to the core network node of the first domain.

Specifically, the handover processing module 62 is specifically configured to: send the Handover Required message only to the core network node of the first domain according to information which is also carried in the measurement report message and indicates that the user equipment is not a member of a cell of a target micro cell base station;
or
release all the services of the user equipment in the another domain except the first domain first according to information which is also carried in the measurement report message and indicates that the user equipment is not a member of a cell of a target micro cell base station, and then send the Handover Required message only to the core network node of the first domain.

This embodiment further provides a radio network controller, where a specific structure thereof is shown in FIG. 7, which includes the following modules:
a measurement report message receiving module 71, configured to receive a measurement report message sent by a user equipment; and
a handover processing module 72, configured to: when the user equipment has an emergency service in a first domain, send a Handover Required message separately to core network nodes of the first domain and another domain except the first domain, where the Handover Required message sent to the core network node of the another domain carries an indication which indicates that the user equipment has the emergency service in the first domain or does not carry a closed subscriber group identity of a micro cell base station, so that the core network node of the another domain sends a Handover Request message to the micro cell base station, and the micro cell base station rejects a bearer of a non-emergency service of the user equipment and hands over the emergency service of the user equipment in the first domain to a cell in which the micro cell base station is located;
   or
when the user equipment has an emergency service in the first domain, send a Handover Required message separately to core network nodes of the first domain and another domain except the first domain, and after receiving a Handover Preparation Failure message sent by the core network node of the another domain, send no Handover Cancel message to the core network node of the first domain, so that the core network node of the first domain sends a Handover Request message to the micro cell base station, and the micro cell base station rejects a bearer of a non-emergency service of the user equipment and hands over the emergency service of the user equipment in the first domain to a cell in which the micro cell base station is located.

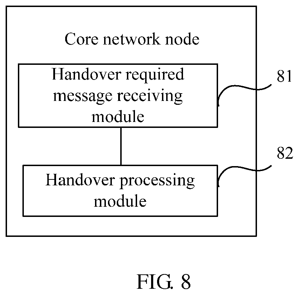

This embodiment further provides a core network node, where a specific structure thereof is shown in FIG. 8, which includes the following modules:
a Handover Required message receiving module 81, configured to receive a Handover Required message which is sent by a radio network controller and indicates that a user equipment has an emergency service in another domain; and
a handover processing module 82, configured to send a Handover Request message to a micro cell base station without performing access control on the user equipment; or send a Handover Request message to a micro cell base station after access control on the user equipment fails.

The micro cell base station may be an HNB, which may also be referred to as a femtocell base station, a femto, or an AP. The multiple domains of the UE may be a PS domain or a CS domain, and the UE may be a UE in a radio communication system such as GSM, GPRS, CDMA2000, TD-SCDMA, LTE, WLAN/WiFi, or WiMAX.

Specific processes for handing over a UE having an emergency service to a micro cell base station by using the apparatuses according to the embodiments of the present invention is similar to the foregoing method embodiments, and therefore no further details are provided herein.

According to the above description, in the embodiments of the present invention, after receiving a Handover Request message carrying indication information indicating that a UE has an emergency service in a first domain, even though the Handover Request message carries a member state indication of the UE that indicates a non-member, a micro cell base station, such as a target HNB, still hands over the emergency service of the UE in the first domain to a cell in which the micro cell base station is located, thereby ensuring to handover the emergency service of the UE into the cell of the micro cell base station to which the UE has no permission to access.

The embodiments of the present invention make relatively small modification to functions of a micro cell base station and a radio access network, and make no modification to functions of a core network node of various domains of a UE, and can be easily implemented.

A person skilled in the art may clearly understand that, for the convenience and brevity of description, the division of the functional modules is merely described as an example. In actual application, the functional may be assigned to different functional modules to perform according to requirements, that is, the interior structure of the apparatus is divided into different functional modules to perform all or partial functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disc, or an optical disc.

The foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make replacements to some technical features thereof, without departing from the scope of the technical solutions of the embodiments of the present invention.

## Claims

1. A handover method, comprising:
when an access mode of a micro cell base station is a closed mode, where access is permitted only to user equipment that is member of an associated closed subscriber group (CSG), receiving (11), by the micro cell base station, a Handover Request message sent by a core network node of a first domain of either a packet switched (PS) domain or a circuit switched (CS) domain, wherein the Handover Request message carries a member state indication of a user equipment indicating a non-member of the CSG and indicates the user equipment has service in multiple domains and an emergency service in the first domain; and
rejecting (12), by the micro cell base station, a bearer of a non-emergency service of the user equipment in the first domain, and handing over, by the micro cell base station, the emergency service of the user equipment in the first domain to a cell in which the micro cell base station is located;
**characterized in that**
the core network node of the first domain sends the handover request message without performing access control on the user equipment or after access control on the user equipment fails.

2. The method according to claim 1, wherein the rejecting, by the micro cell base station, a bearer of a non-emergency service of the user equipment in the first domain comprises:
when the Handover Request message sent by the core network node of the first domain indicates that the user equipment has a service in multiple domains, rejecting, by the micro cell base station after receiving a Handover Request message sent by a core network node of another domain except the first domain of the multiple domains, a service of the user equipment in the another domain, rejecting a bearer of the non-emergency service of the user equipment in the first domain, and handing over the emergency service of the user equipment in the first domain to the cell in which the micro cell base station is located.

3. The method according to claim 1, wherein the rejecting, by the micro cell base station, a bearer of a non-emergency service of the user equipment in the first domain comprises:
when the Handover Request message sent by the core network node of the first domain indicates that the user equipment has a service in multiple domains, directly rejecting, by the micro cell base station without waiting for a Handover Request message sent by a core network node of another domain except the first domain of the multiple domains, the bearer the non-emergency service of the user equipment in the first domain.

4. A system comprising a core network node and a microcell base station,
wherein the micro cell base station, comprises:
a handover request receiving module (51), configured to: when an access mode of the micro cell base station is a closed mode, where access is permitted only to user equipment that is member of an associated closed subscriber group (CSG), receive a Handover Request message sent by the core network node of a first domain of either a packet switched (PS) domain or a circuit switched (CS) domain, wherein the Handover Request message carries indication information indicating that a member state indication of the user equipment is a non-member of the CSG and indicates the user equipment has service in multiple domains and an emergency service in the first domain; and
a handover processing module (52), configured to reject a bearer of a non-emergency service of the user equipment in the first domain, and hand over the emergency service of the user equipment in the first domain to a cell in which the micro cell base station is located;
**characterized in that**
the core network node of the first domain sends the handover request message without performing access control on the user equipment or after access control on the user equipment fails.

5. The system according to claim 4, wherein
the handover processing module (52) is specifically configured to: when the Handover Request message which is sent by the core network node of the first domain and received by the handover request receiving module (51) indicates that the user equipment has a service in multiple domains, and after receiving a Handover Request message sent by a core network node of another domain except the first domain of the multiple domains, reject a service of the user equipment in the another domain, reject a bearer of a non-emergency service of the user equipment in the first domain, and hand over the emergency service of the user equipment in the first domain to the cell in which the micro cell base station is located.

6. The system according to claim 4, wherein
the handover processing module (52) is specifically configured to: when the Handover Request message which is sent by the core network node of the first domain and received by the handover request receiving module(51) indicates that the user equipment has a service in multiple domains, directly reject a bearer of a non-emergency service of the user equipment in the first domain without waiting for a Handover Request of the user equipment sent by a core network node of another domain except the first domain of the multiple domains, and hand over the emergency service of the user equipment in the first domain to the cell in which the micro cell base station is located.

## Patentansprüche

1. Weiterleitungsverfahren, umfassend:
wenn ein Zugriffsmodus einer Mikrozellenbasisstation ein geschlossener Modus ist, wo der Zugriff nur einem Benutzergerät gestattet wird, das Mitglied einer zugehörigen geschlossenen Teilnehmergruppe (CSG) ist, Empfangen (11) durch die Mikrozellenbasisstation einer Weiterleitungsaufforderungsnachricht, die von einem Kernnetzwerkknoten einer ersten Domäne entweder einer paketvermittelten (PS) Domäne oder einer leitungsvermittelten (CS) Domäne gesendet wird, wobei die Weiterleitungsaufforderungsnachricht eine Mitgliedszustandsangabe eines Benutzergeräts übermittelt, die ein Nicht-Mitglied der CSG angibt, und angibt, dass das Benutzergerät Dienst in mehreren Domänen und einen Notfalldienst in der ersten Domäne aufweist; und
Ablehnen (12) durch die Mikrozellenbasisstation eines Trägers eines Nicht-Notfalldiensts des Benutzergeräts in der ersten Domäne und Weiterleiten durch die Mikrozellenbasisstation des Notfalldiensts des Benutzergeräts in der ersten Domäne zu einer Zelle, in welcher die Mikrozellenbasisstation liegt;
**dadurch gekennzeichnet, dass**
der Kernnetzwerkknoten der ersten Domäne die Weiterleitungsaufforderungsnachricht sendet, ohne eine Zugriffs steuerung bei dem Benutzergerät durchzuführen oder nachdem die Zugriffssteuerung bei dem Benutzergerät fehlschlägt.

2. Verfahren nach Anspruch 1, wobei das Ablehnen durch die Mikrozellenbasisstation eines Trägers eines Nicht-Notfalldiensts des Benutzergeräts in der ersten Domäne Folgendes umfasst:
wenn die Weiterleitungsaufforderungsnachricht, die von den Kernnetzwerkknoten der ersten Domäne gesendet wird, angibt, dass das Benutzergerät einen Dienst in mehreren Domänen aufweist, Ablehnen durch die Mikrozellenbasisstation nach dem Empfangen einer Weiterleitungsaufforderungsnachricht, die von einem Kernnetzwerkknoten einer anderen Domäne mit Ausnahme der ersten Domäne der mehreren Domänen gesendet wird, eines Diensts des Benutzergeräts in der anderen Domäne, Ablehnen eines Trägers des Nicht-Notfalldiensts des Benutzergeräts in der ersten Domäne und Weiterleiten des Notfalldiensts des Benutzergeräts in der ersten Domäne zu der Zelle, in welcher die Mikrozellenbasisstation liegt.

3. Verfahren nach Anspruch 1, wobei das Ablehnen durch die Mikrozellenbasisstation eines Trägers eines Nicht-Notfalldiensts des Benutzergeräts in der ersten Domäne Folgendes umfasst:
wenn die Weiterleitungsaufforderungsnachricht, die von dem Kernnetzwerkknoten der ersten Domäne gesendet wird, angibt, dass das Benutzergerät einen Dienst in mehreren Domänen aufweist, direktes Ablehnen durch die Mikrozellenbasisstation, ohne auf eine Weiterleitungsaufforderungsnachricht zu warten, die von einem Kernnetzwerkknoten einer anderen Domäne mit Ausnahme der ersten Domäne der mehreren Domänen gesendet wird, des Trägers des Nicht-Notfalldiensts des Benutzergeräts in der ersten Domäne.

4. System, das ein Kernnetzwerkknoten und eine Mikrozellenbasisstation aufweist, wobei die Mikrozellenbasisstation Folgendes aufweist:
ein Weiterleitungsaufforderungsempfangsmodul (51), das konfiguriert ist, um: wenn ein Zugriffsmodus der Mikrozellenbasisstation ein geschlossener Modus ist, wo der Zugriff nur einem Benutzergerät gestattet wird, das Mitglied einer zugehörigen geschlossenen Teilnehmergruppe (CSG) ist, eine Weiterleitungsaufforderungsnachricht, die von dem Kernnetzwerkknoten einer ersten Domäne entweder einer paketvermittelten (PS) Domäne oder einer leitungsvermittelten (CS) Domäne gesendet wird, zu empfangen, wobei die Weiterleitungsaufforderungsnachricht Angabeinformationen übermittelt, die angeben, dass eine Mitgliedzustandsangabe des Benutzergeräts ein Nicht-Mitglied der CSG ist, und angibt, dass das Benutzergerät Dienst in mehreren Domänen und einen Notfalldienst in der ersten Domäne aufweist; und
ein Weiterleitungsbearbeitungsmodul (52), das konfiguriert ist, um einen Träger eines Nicht-Notfalldiensts des Benutzergeräts in der ersten Domäne abzulehnen und den Notfalldienst des Benutzergeräts in der ersten Domäne zu einer Zelle weiterzuleiten, in welcher die Mikrozellenbasisstation liegt;
**dadurch gekennzeichnet, dass** der Kernnetzwerkknoten der ersten Domäne die Weiterleitungsaufforderungsnachricht sendet, ohne eine Zugriffssteuerung bei dem Benutzergerät durchzuführen oder nachdem die Zugriffssteuerung bei dem Benutzergerät fehlschlägt.

5. System nach Anspruch 4, wobei
das Weiterleitungsbearbeitungsmodul (52) spezifisch konfiguriert ist, um: wenn die Weiterleitungsaufforderungsnachricht, welche von dem Kernnetzwerkknoten der ersten Domäne gesendet wird und von dem Weiterleitungsaufforderungsempfangsmodul (51) empfangen wird, angibt, dass das Benutzergerät einen Dienst in mehreren Domänen aufweist, und nach dem Empfangen einer Weiterleitungsaufforderungsnachricht, die von einem Kernnetzwerkknoten einer anderen Domäne mit Ausnahme der ersten Domäne der mehreren Domänen gesendet wird, einen Dienst des Benutzergeräts in der anderen Domäne abzulehnen, einen Träger eines Nicht-Notfalldiensts des Benutzergeräts in der ersten Domäne abzulehnen und den Notfalldienst des Benutzergeräts in der ersten Domäne zu der Zelle weiterzuleiten, in welcher die Mikrozellenbasisstation liegt.

6. System nach Anspruch 4, wobei
das Weiterleitungsbearbeitungsmodul (52) spezifisch konfiguriert ist, um: wenn die Weiterleitungsaufforderungsnachricht, welche von dem Kernnetzwerkknoten der ersten Domäne gesendet wird und von dem Weiterleitungsaufforderungsempfangsmodul (51) empfangen wird, angibt, dass das Benutzergerät einen Dienst in mehreren Domänen aufweist, direkt einen Träger eines Nicht-Notfalldiensts des Benutzergeräts in der ersten Domäne abzulehnen, ohne auf eine Weiterleitungsaufforderung des Benutzergeräts zu warten, die von einem Kernnetzwerkknoten einer anderen Domäne mit Ausnahme der ersten Domäne der mehreren Domänen gesendet wird, und den Notfalldienst des Benutzergeräts in der ersten Domäne zu der Zelle weiterzuleiten, in welcher die Mikrozellenbasisstation liegt.

## Revendications

1. Procédé de transfert intercellulaire, comprenant :
quand un mode d'accès d'une station de base microcellulaire est un mode fermé, où l'accès est autorisé uniquement pour un équipement utilisateur qui est membre d'un groupe d'abonnés fermé (CSG) associé, la réception (11), par la station de base microcellulaire, d'un message de requête de transfert intercellulaire envoyé par un noeud de réseau central d'un premier domaine, un domaine à commutation de paquets (PS) ou un domaine à commutation de circuits (CS), le message de requête de transfert intercellulaire portant une indication d'état de membre d'un équipement utilisateur indiquant un non-membre du CSG et indiquant que l'équipement utilisateur a un service dans de multiples domaines et un service d'urgence dans le premier domaine ; et
le rejet (12), par la station de base microcellulaire, d'un support d'un service non urgent de l'équipement utilisateur dans le premier domaine, et le transfert, par la station de base microcellulaire, du service d'urgence de l'équipement utilisateur dans le premier domaine à une cellule dans laquelle est située la station de base microcellulaire ;
**caractérisé en ce que**
le noeud de réseau central du premier domaine envoie le message de requête de transfert intercellulaire sans effectuer de contrôle d'accès sur l'équipement utilisateur ou après qu'un contrôle d'accès sur l'équipement utilisateur a échoué.

2. Procédé selon la revendication 1, dans lequel le rejet, par la station de base microcellulaire, d'un support d'un service non urgent de l'équipement utilisateur dans le premier domaine comprend :
quand le message de requête de transfert intercellulaire envoyé par le noeud de réseau central du premier domaine indique que l'équipement utilisateur a un service dans de multiples domaines, le rejet, par la station de base microcellulaire, après la réception d'un message de requête de transfert intercellulaire envoyé par un noeud de réseau central d'un autre domaine hormis le premier domaine parmi les multiples domaines, d'un service de l'équipement utilisateur dans l'autre domaine, le rejet d'un support du service non urgent de l'équipement utilisateur dans le premier domaine, et le transfert du service d'urgence de l'équipement utilisateur dans le premier domaine à la cellule dans laquelle est située la station de base microcellulaire.

3. Procédé selon la revendication 1, dans lequel le rejet, par la station de base microcellulaire, d'un support d'un service non urgent de l'équipement utilisateur dans le premier domaine comprend :
quand le message de requête de transfert intercellulaire envoyé par le noeud de réseau central du premier domaine indique que l'équipement utilisateur a un service dans de multiples domaines, le rejet direct, par la station de base microcellulaire, sans attendre un message de requête de transfert intercellulaire envoyé par un noeud de réseau central d'un autre domaine hormis le premier domaine parmi les multiples domaines, du support du service non urgent de l'équipement utilisateur dans le premier domaine.

4. Système comprenant un noeud de réseau central et une station de base microcellulaire,
la station de base microcellulaire comprenant :
un module de réception de requête de transfert intercellulaire (51), configuré pour : quand un mode d'accès de la station de base microcellulaire est un mode fermé, où l'accès est autorisé uniquement pour un équipement utilisateur qui est membre d'un groupe d'abonnés fermé (CSG) associé, recevoir un message de requête de transfert intercellulaire envoyé par le noeud de réseau central d'un premier domaine, un domaine à commutation de paquets (PS) ou un domaine à commutation de circuits (CS), le message de requête de transfert intercellulaire portant des informations d'indication indiquant qu'une indication d'état de membre de l'équipement utilisateur est un non-membre du CSG et indiquant que l'équipement utilisateur a un service dans de multiples domaines et un service d'urgence dans le premier domaine ; et
un module de traitement de transfert intercellulaire (52), configuré pour rejeter un support d'un service non urgent de l'équipement utilisateur dans le premier domaine, et transférer le service d'urgence de l'équipement utilisateur dans le premier domaine à une cellule dans laquelle est située la station de base microcellulaire ;
**caractérisé en ce que**
le noeud de réseau central du premier domaine envoie le message de requête de transfert intercellulaire sans effectuer de contrôle d'accès sur l'équipement utilisateur ou après qu'un contrôle d'accès sur l'équipement utilisateur a échoué.

5. Système selon la revendication 4, dans lequel
le module de traitement de transfert intercellulaire (52) est spécifiquement configuré pour : quand le message de requête de transfert intercellulaire qui est envoyé par le noeud de réseau central du premier domaine et reçu par le module de réception de requête de transfert intercellulaire (51) indique que l'équipement utilisateur a un service dans de multiples domaines, et après la réception d'un message de requête de transfert intercellulaire envoyé par un noeud de réseau central d'un autre domaine hormis le premier domaine parmi les multiples domaines, rejeter un service de l'équipement utilisateur dans l'autre domaine, rejeter un support d'un service non urgent de l'équipement utilisateur dans le premier domaine, et transférer le service d'urgence de l'équipement utilisateur dans le premier domaine à la cellule dans laquelle est située la station de base microcellulaire.

6. Système selon la revendication 4, dans lequel
le module de traitement de transfert intercellulaire (52) est spécifiquement configuré pour : quand le message de requête de transfert intercellulaire qui est envoyé par le noeud de réseau central du premier domaine et reçu par le module de réception de requête de transfert intercellulaire (51) indique que l'équipement utilisateur a un service dans de multiples domaines, rejeter directement un support d'un service non urgent de l'équipement utilisateur dans le premier domaine sans attendre une requête de transfert intercellulaire de l'équipement utilisateur envoyée par un noeud de réseau central d'un autre domaine hormis le premier domaine parmi les multiples domaines, et transférer le service d'urgence de l'équipement utilisateur dans le premier domaine à la cellule dans laquelle est située la station de base microcellulaire.
